# EUROPEAN PATENT SPECIFICATION

(11) **EP 3 305 699 B1**
(45) Date of publication and mention of the grant of the patent: **22.04.2020**
(21) Application number: 16803015.3
(22) Date of filing: 13.05.2016
(51) Int. Cl.: B65H 55/00, D01F 6/62, D03D 15/00

(54) **DRUM-SHAPED PACKAGE FORMED OF POLY(LACTIC ACID)-BASED MONOFILAMENT**
TROMMELFÖRMIGE AUFWICKLUNG AUS POLY(MILCHSÄURE)-BASIERTEM MONOFILAMENT
ENROULEMENT EN FORME DE TAMBOUR FORMÉ D'UN MONOFILAMENT À BASE D'ACIDE POLYLACTIQUE

(30) Priority: 29.05.2015 JP 2015109780
(43) Date of publication of application: 11.04.2018
(73) Proprietor: Toray Industries, Inc., Tokyo 103-8666 (JP)
(72) Inventor: YAMAGUCHI, Sumio, Nagoya-shi Aichi 451-8666 (JP); MURATA, Sho, Nagoya-shi Aichi 451-8666 (JP); HAYASHI,Tsuyoshi, Nagoya-shi Aichi 451-8666 (JP)
(74) Representative: Kador & Partner PartG mbB
(86) International application number: PCT/JP2016/064215
(87) International publication number: WO 2016/194578

(56) References cited:
- WO-A1-03/040011
- JP-A- 2001 131 826
- JP-A- 2004 084 081
- JP-A- 2008 031 570
- JP-A- 2010 100 950
- JP-A- 2010 100 950
- JP-A- 2013 032 223
- JP-B2- 4 745 091

## Description

### TECHNICAL FIELD

The present invention relates to a drum-shaped package formed of a poly(lactic acid)-based monofilament. More specifically, it relates to a drum-shaped package that is formed of a poly(lactic acid)-based monofilament and shows excellent high order passage capability during warping and weaving to allow the production of high quality plain gauze fabrics.

### BACKGROUND ART

In recent years, as many environmental issues such as prevention of global warming, preservation of fossil resources, and waste reduction are widely featured in the media, much attention is attracted to biodegradable polymers that can decompose to biomass. Such biodegradable polymers include poly(lactic acid) polymers. Poly(lactic acid) polymers are produced from lactic acids resulting from fermentation of starch extracted from plants and they are the best biodegradable polymers that are decomposable to biomass in terms of the balance among transparency, mechanical properties, heat resistance, and cost. Generally used poly(lactic acid) monofilament production methods include a two step process in which an unstretched yarn is wound up first and stretched subsequently (Patent document 1), a single step process in which molten polymer is directly stretched and wound up (Patent document 2), and a straight yarn separation process designed to separate a multifilament (Patent document 3). The single step process is better than the two step process and the straight yarn separation process in terms of poly(lactic acid) monofilament production cost.

Patent document 2 proposes a production method that adopts a single step process to produce a poly(lactic acid) monofilament package free from yarn dropout at the package's end surfaces under controlled conditions including a stretching tension of 0.04 cN/dtex to 0.35 cN/dtex and a wind-up tension of 0.04 cN/dtex to 0.20 cN/dtex.

Patent document 4 discloses a biodegradable polyester fiber made from an aliphatic polyester having a melting point of 130 °C or higher and subjected to fiber separation after crimping. The biodegradable polyester fiber is 20-40 dtex in single filament fineness, 60-100% in elongation at break and the number of filaments is 6-12. In the fiber, the aliphatic polyester preferably consists of an L-lactic acid-based polylactic acid.

Patent document 5 discloses a polylactic acid monofilament using a polylactic acid resin whose heat shrinkage stress at 80 °C is 0 - 0.04 cN/dtex, and whose stress at the primary yield point is 0.5 - 1.3 cN/dtex. The woven fabric for the screen door is obtained by this monofilament.

A false-twisted yarn is disclosed in Patent document 6, the yarn composed of a sheath-core conjugated polyester filament having a core part made of polylactic acid and a sheath part made of an aromatic polyester, satisfying the following formula: CS≥1.5, S_{1.5}(%)≥50, and S_{1.8}(%)≥20, wherein CS is an average out-of-roundness ratio, S_{1.5}(%) is (the number of filaments having an out-of-roundness ratio of ≥ 1.5) / (the total number of filaments)·100, and S_{1.8}(%) is (the number of filaments having an out-of-roundness ratio of ≥1.8) / (the total number of filaments)·100.

### PRIOR ART DOCUMENTS

### PATENT DOCUMENTS

Patent document 1: Japanese Unexamined Patent Publication (Kokai) No. 2001-131826
Patent document 2: Japanese Unexamined Patent Publication (Kokai) No. 2013-32223
Patent document 3: Japanese Unexamined Patent Publication (Kokai) No. 2010-84286
Patent Document 4: JP 4 745 091 B2
Patent Document 5: JP 2010 100950 A
Patent Document 6 : JP 2008 031570 A

### SUMMARY OF THE INVENTION

### PROBLEM TO BE SOLVED BY THE INVENTION

However, the poly(lactic acid) monofilament described in Patent document 1, which is produced by the two step process, should be urgently improved for further production cost, and there is a strong demand for a single step process that can be applied to industrial production.

The poly(lactic acid) monofilament drum-shaped package described in Patent document 2 can serve to produce high quality woven fabrics by depressing the variation in unwinding tension while the monofilaments are unwound from the package during warping and weaving, but the shrinkage stress is high in the innermost layer part of the package, leading to the persistent problem of yarn breakage due to irregular unwinding in the innermost layer part.

The poly(lactic acid)-based monofilament described in Patent document 3 is produced by separating a stretched multifilament, leading to the problem of an uneven fineness distribution when used to form high density woven fabrics. In addition, as the straight yarn separation process is adopted and accordingly a further reduction in the production cost is strongly required.

An object of the present invention is to solve the above problems and provide a drum-shaped package that is formed of a poly(lactic acid) based monofilament and shows excellent high order passage capability during weaving to allow the production of high quality plain gauze fabrics.

### MEANS FOR SOLVING THE PROBLEM

The present invention solves the above-mentioned problem by defining a drum-shaped package as described in independent claim 1. Technical features are further described below.
(1) A drum-shaped package formed of a poly(lactic acid)-based monofilament 50 wt% or more of which is constituted from lactic acid monomer, the drum-shaped package being characterized in that the dry heat shrinkage stress of the monofilament in the innermost layer section of the package is 0.040 cN/dtex or less, wherein the monofilament has a tensile strength of 2.5 cN/dtex or more and a boiling water shrinkage rate of 20% or less.
(2) A drum-shaped package formed of a poly(lactic acid)-based monofilament as described in paragraph (1), wherein the monofilament has a fineness of 15 dtex to 40 dtex.

### ADVANTAGEOUS EFFECTS OF THE INVENTION

The present invention serves to provide a drum-shaped package that is formed of a poly(lactic acid)-based monofilament and shows excellent high order passage capability during weaving to allow the production of high quality plain gauze fabrics.

### BRIEF DESCRIPTION OF THE DRAWINGS

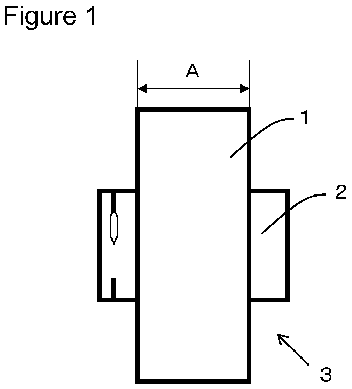

[Fig. 1] shows a schematic front view of the drum-shaped package formed of a poly(lactic acid)-based monofilament according to the present invention.
[Fig. 2] shows a schematic view of a typical spinning apparatus for production of the drum-shaped package formed of a poly(lactic acid)-based monofilament according to the present invention.

### DESCRIPTION OF PREFERRED EMBODIMENTS

The poly(lactic acid)-based polymer used for the present invention is a polymer containing -(O-CHCH₃-CO)- as repeating unit and produced through the polymerization of a lactic acid or a lactic acid based oligomer such as lactide. For lactic acids, there are two types of optical isomers, i.e., D-lactic acid and L-lactic acid, and their polymers include poly(D-lactic acid), which contain only the D-form, poly(L-lactic acid), which contain only the L-form, and poly(lactic acid) polymers that contain both forms. As the optical purity of the D-lactic acid or L-lactic acid in a poly(lactic acid) polymer decreases, the crystallinity decreases and the melting point depression increases. To ensure a high heat resistance, therefore, it is preferable for the optical purity to be 90% or more. Here, instead of using a simple mixture of two optical isomers, it is preferable to adopt a stereocomplex material produced by forming fiber from a blend of the two optical isomers and heat-treating it at a high temperature of 140°C or more to form a racemic crystal because the melting point can be increased dramatically.

For the poly(lactic acid)-based monofilament used for the present invention, it is essential for the constituent lactic acid monomers to account for 50 wt% or more of the polymer from the viewpoint of fossil resources conservation and biorecycling. It is preferable for the constituent lactic acid monomers of the polymer to account for 70 wt% or more, more preferably 75 wt% or more, and still more preferably 95% wt% or more. In addition, components other than lactic acid may be copolymerized unless they impair the properties of the poly(lactic acid) that accounts for a proportion in the above range.

For the drum-shaped package according to the present invention, it is essential that the dry heat shrinkage stress that occurs in the poly(lactic acid)-based monofilament wound in the innermost layer part of the package be 0.040 cN/dtex or less.

For the definition of the term "innermost layer part of the package" used herein, the innermost layers are located within a winding thickness of 5 mm. The term "dry heat shrinkage stress" refers to the continuous dry heat shrinkage stress in the fiber axis direction and it is measured by running a thread between two rollers, that is, a yarn feeding roller and a pull-out roller, subjecting it to dry heat treatment between these rollers, and subsequently measuring the shrinkage stress (cN) continuously using a tension measuring device. A set of six measurements is taken per centimeter and their average is calculated. Such averages are collected from a total of 1,000 sets of measurements. The 1,000 calculations thus obtained are averaged to give a value that represents the dry heat shrinkage stress.

A dry heat shrinkage stress maintained at a 0.040 cN/dtex or less serves to prevent yarn breakage as the poly(lactic acid)-based monofilament is unwound from the innermost layer part of the package during weaving, thus leading to a plain gauze fabric with high quality and a package with excellent high order passage capability. As it exceeds 0.040 cN/dtex, the residual shrinkage stress may act to allow the poly(lactic acid)-based monofilament in the innermost layer part of the package to move from an upper layer into a lower layer, possibly resulting in easy yarn breakage during unwinding and deteriorated high order passage capability during weaving. With respect to the woven fabric quality, furthermore, the resulting plain gauze fabric may suffer from deterioration in quality due to yarn stripe defects attributed to the high order passage capability in the innermost layer part and stopping of the weaving machine attributed to yarn breakage. It is preferably 0.030 cN/dtex or less. A smaller dry heat shrinkage stress is more preferable, but practically, the minimum value of dry heat shrinkage stress for the present invention is 0.020 cN/dtex or so.

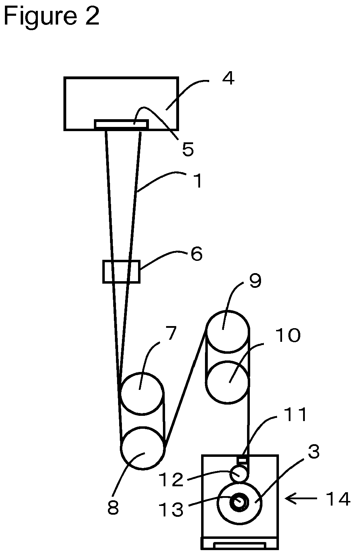

To control the dry heat shrinkage stress in such a required range, useful methods include one in which, as described later, the roller bail 12 of the wind-up device 14 in Fig. 2 is forcedly driven and controlled so that it is overfeed (accelerated) by 0.05% to 2.00% relative to the surface speed of the package 3, followed by relaxation and winding-up, and one in which the load applied by the roller bail 12 per unit length of contact with the package 3 (hereinafter referred to as surface pressure) is controlled in the range of 50 N/m to 125 N/m during winding-up. These methods may be performed in combination to achieve a larger decrease in dry heat shrinkage stress.

The poly(lactic acid)-based monofilament used to in the drum-shaped package according to the present invention has a tensile strength of 2.5 cN/dtex or more. If it is 2.5 cN/dtex or more, it will be possible to prevent yarn breakage that might occur while the poly(lactic acid) monofilament is unwound from the package during weaving and also possible to produce a plain gauze fabric with a high woven fabric strength. It is preferably 3.5 cN/dtex or more. A larger strength is more preferable, but the maximum strength value for the present invention is 5.0 cN/dtex. With respect to the strength, the difference in speed between the heated first godet roller and the heated second godet roller is utilized for stretching to realize a required strength.

The poly(lactic acid)-based monofilament used to in the drum-shaped package according to the present invention preferably has an elongation percentage of 35% to 55%. A value controlled in this range ensures an improved high order passage capability during weaving and high order processing stability in producing tea bags. The elongation percentage is more preferably 40% to 50%. With respect to the elongation percentage, the difference in speed between the heated first godet roller and the heated second godet roller is utilized for stretching to realize a required elongation percentage.

The poly(lactic acid)-based monofilament used in the drum-shaped package according to the present invention preferably has a fineness of 15 dtex to 40 dtex. A value controlled in this range allows the production of a plain gauze fabric for tea bags having an optimum rate of hole area per unit fabric area to ensure an optimum tea extraction rate to provide tasty tea.

The poly(lactic acid)-based monofilament used in the drum-shaped package according to the present invention has a boiling water shrinkage rate of 20% or less. A value controlled at 20% or less allows the production of a plain gauze fabric for tea bags that can maintain an optimum rate of hole area per unit fabric area, despite some shrinkage that may occur when pouring hot water, to ensure an optimum tea extraction rate to provide tasty tea. It is preferably 17% or less.

Next, a typical method for producing the poly(lactic acid)-based monofilament-containing package according to the present invention is described below with reference to the schematic process drawing given in Fig. 2. Fig. 2 illustrates a typical method for producing the poly(lactic acid)-based monofilament-containing package according to the present invention.

The spinning block 4 in the melt-spinning machine is heated by a heating means that is not shown in the drawing. A spinneret 5 is attached to the spinning block 4 and a poly(lactic acid)-based polymer is melted and discharged through the spinneret 5 to form a thread 1. The thread 1 is cooled uniformly by a cooling device (not shown in the diagram) located downstream of the spinneret 5, and subsequently an oil solution is supplied from an oil feeding device 6 to the thread 1, followed by stretching between the first godet rollers 7 and 8 and the second godet rollers 9 and 10 and winding on a wind-up device 14 to form a package 3.

In the method to be used to wind up the poly(lactic acid)-based monofilament according to the present invention, it is preferable to perform the wind-up step with a wind-up tension of 0.04 cN/dtex to 0.15 cN/dtex. This wind-up tension can be controlled by, for example, adjusting the difference in speed between the first godet rollers 7 and 8 and the second godet rollers 9 and 10 or the difference in speed between the second godet rollers 9 and 10 and the wind-up device 14. A wind-up tension of 0.04 cN/dtex or more ensures stable wind-up operations. A wind-up tension of 0.15 cN/dtex or less, on the other hand, serves to prevent the thread from dropping from the package end face at a traverse turn-around position, ensuring the formation of a drum-shaped package. It is more preferably 0.06 cN/dtex to 0.10 cN/dtex. Implementation of the wind-up step at a wind-up tension in this range serves to prevent the thread from dropping from the package end face to ensure the production of a drum-shaped package in a good form. After winding up for a required time period, the resulting package 3 is free from excessive tight winding to allow the package 3 to be pulled out easily from the spindle 13 and ensure stable operations.

In the wind-up method for the poly(lactic acid)-based monofilament according to the present invention, it is preferable for the roller bail 12 of the wind-up device 14 to be set so that the overfeed rate (hereinafter referred to RB-driving OF rate) relative to the surface speed of the package 3 will be 0.05% to 2.00%.

The RB-driving OF rate is calculated as VR = V × (1 + OF rate / 100) where VR and V represent the set speed of the roller bail 12 and the set wind-up speed, respectively. The set speed of the roller bail 12 (VR) is always controlled to ensure rotation at the set wind-up speed regardless of the roller bail OF rate. Accordingly, when the roller bail 12 is driven forcedly, the spindle 13 should work to brake the roller bail 12 so as to allow the roller bail 12 to rotate at the set wind-up speed (V). Accordingly, the speed of the spindle 13 should be lower than the set wind-up speed (V). Thus, the roller bail 12 rotates at a speed corresponding to the set wind-up speed (V) whereas the spindle 13 rotates at a speed lower than the set wind-up speed (V), resulting in a relaxed state between the roller bail 12 and the spindle 13 to allow the thread 1 to be wound up in a relieved tension state.

This means that a RB-driving OF rate controlled in the above range allows the thread 1 to be wound up in a moderately relieved tension state between the roller bail 12 and the spindle 13 to ensure relaxation of the residual shrinkage stress. Accordingly, the dry heat shrinkage stress of the poly(lactic acid)-based monofilament, located in the innermost layer part of the package in particular, can be controlled suitably at below 0.040 cN/dtex to realize the production of a high quality plain gauze fabric and a poly(lactic acid) monofilament drum-shaped package that shows a high order passage capability during weaving. When producing a fully wound package, furthermore, it is possible to depress the deformation and or swelling of the package, thus allowing the production of a poly(lactic acid)-based monofilament-containing drum-shaped package in a good shape. The RB-driving OF rate is more preferably 0.10% to 1.00%.

Adjust the air pressure control provided on the wind-up device 14 to a predetermined surface pressure value. To set the surface pressure to 70 N/m, for example, in the case where the winding width A is 70 mm and where 12 drums are wound up on the paper tube attached to the spindle 13, the air pressure for surface pressure setting is adjusted so that a pressure of 58.8 N is applied by the roller bail 12 to the spindle 13.

In the wind-up method for the poly(lactic acid)-based monofilament according to the present invention, the load applied by the roller bail 12 per unit length of contact with the package 3 (hereinafter referred to as surface pressure) in the wind-up device 14 is controlled preferably in the range of 50 N/m to 125 N/m. A value in this range ensures that a package having a moderate hardness can be produced and wound up stably to ensure relaxation of the residual shrinkage stress. Accordingly, the dry heat shrinkage stress of the poly(lactic acid)-based monofilament, located in the innermost layer part of the package in particular, can be controlled suitably at below 0.040 cN/dtex to realize the production of a high quality plain gauze fabric and a poly(lactic acid)-based monofilament-containing drum-shaped package that shows a high order passage capability during weaving. The surface pressure is more preferably 60 N/m to 100 N/m.

Accordingly, as described above, it is particularly preferable for the winding up step to be performed in such a manner that the thread 1 between the roller bail 12 and the spindle 13 is in a moderately relaxed tension state while the package maintains a moderate hardness, with the OF rate and the surface pressure being controlled particularly preferably at 0.05% to 2.00% and 50 N/m to 125 N/m, respectively.

The oil solution supply step in the production method for the poly(lactic acid)-based monofilament according to the present invention package is performed by using a generally known spinning oil solution and oil feeding device. Useful examples of the spinning oil solution include all types of commonly used spinning oil solutions such as straight type oil solutions diluted with mineral oil and emulsion type oil solutions diluted with water. Useful examples of the lubricant component and emulsifier component of the spinning oil solution include lubricants such as ester based, mineral oil based, and ether ester based ones, ether type nonionic surface active agents having polyoxy alkylene groups in their molecules, polyhydric alcohol based partial ester type nonionic surface active agents, and polyoxy alkylene based polyhydric alcohol fatty acid ester type nonionic surface active agents. Useful examples of the oil feeding device include oiling roller type and oiling guide type apparatuses. The rate of oil solution deposition on fiber is preferably 0.3 wt% to 1.0 wt% and more preferably 0.5 wt% to 0.8 wt%.

In a production method for a drum-shaped package formed of the poly(lactic acid)-based monofilament according to the present invention, it is commonly necessary that heated stretching be performed using godet rollers and that the stretching be carried out at a heating temperature of 60°C to 120°C. The heated stretching is preferably performed using heated godet rollers and the godet roller temperature is measured by using a contact type thermometer.

Useful godet rollers include, for example, a combination of a first godet roller and a second godet roller and preferred godet rollers that ensure highly coordinated motion of the thread include Nelson type godet rollers containing pairs of two godet rollers. Winding up is performed by a first godet roller and stretching is carried out between godet rollers moving at different speeds. In the case of single stage stretching, for example, stretching is carried out between the first and second godet rollers. In the case of two stage stretching, it is carried out between the first and second godet rollers and between the second and third godet rollers etc. There are no specific limitations on the draw ratio or the number of stretching steps, but it is preferable to perform single stage stretching at a draw ratio of 3.5 to 4.5. The winding godet roller (first godet roller) is controlled at a temperature in the range of 80°C to 120°C. Controlling the first godet roller temperature at 80°C or more ensures uniform stretching free of uneven crystal structures to realize stable quality without devitrification or decrease in tensile strength. Controlling the first godet roller temperature at 120°C or less serves to prevent yarn breakage due to decreased spinning tension to ensure stable operations. It is more preferably 90°C to 110°C or less.

The stretching godet roller (second godet roller) is controlled at a temperature in the range of 100°C to 130°C. Controlling the second godet roller temperature at 100°C or more serves to increase the oriented crystallinity to allow the production of a poly(lactic acid) monofilament with a low boiling water shrinkage rate. Controlling the second godet roller temperature at below 130°C serves to prevent yarn breakage due to decreased winding tension to ensure stable operations. It is more preferably 110°C to 120°C.

The drum-shaped package according to the present invention preferably has a winding width A of 60 mm to 120 mm. A value in this range serves to prevent variation in tension during unwinding to ensure the production of a woven fabric with improved quality. It is more preferably 70 mm to 90 mm.

The poly(lactic acid)-based monofilament in the drum-shaped package according to the present invention may have any of appropriate cross-sectional shapes such as circular cross section, Y-shaped cross section, T-shaped cross section, flattened cross section, and deformed shapes thereof.

### EXAMPLES

This invention is explained below more specifically with reference to examples. The physical properties examined in Examples were measured by the methods described below and melt-spinning was performed using a spinning apparatus as illustrated in Fig. 2.

### (1) Dry heat shrinkage stress (cN/dtex)

For the poly(lactic acid) monofilament-containing drum-shaped package, a drum with a winding thickness of 2 mm was used and the thread was allowed to travel at a speed of 10 cm/ min between a thread feeding roller and a thread pulling roller. The thread was subjected to dry heat treatment at 100°C between the rollers and the shrinkage stress (cN) was measured continuously by a tension measuring device located downstream. A set of six measurements is taken per centimeter and their average is calculated. Such averages are collected from a total of 1,000 sets of measurements. The 1,000 values thus obtained are then averaged. The measuring apparatus used was a FTA-500 continuous heat shrinkage measuring device manufactured by Toray Engineering Co., Ltd.

### (2) Fineness (dtex)

Measurements were taken according to JIS L1013 (2010) 8.3.1 for test for fineness based on corrected weight (Method A). The official moisture regain was assumed to be 0%.

### (3) Boiling water shrinkage rate (%)

Measurements were taken according to JIS L1013 (2010) 8.18.1. A hank of 20 loops was prepared from a specimen thread using a sizing reel with a circumference of 1.125 m, left to stand for 24 hours, subjected to hank length measurement, immersed in boiling water (99±1.0°C) for 30 minutes, then air-dried, and subjected to hank length measurement, followed by calculating the boiling water shrinkage rate (%) from the hank length measured before and after the immersion in boiling water.

### (4) Tensile strength (cN/dtex), tensile elongation (%)

Measurements were taken according to JIS L1013 (2010) 8.5 for tensile strength and degree of elongation tests. The test used a clamp interval of 500 mm and a tension speed of 500 mm/min. Three measurements were taken repeatedly and their average was adopted.

### (5) Breakage of processed thread (frequency)

First, 100 drums, each in the form of a poly(lactic acid) monofilament-containing drum-shaped package with a winding thickness of 40 mm and a thread weight of 1 kg, were prepared and subjected to weft picking evaluation using an air jet loom weaving machine to determine the yarn breakage frequency. The thread breakage frequency test was designed to count the number of times of thread breakage in a drum with a winding thickness of more than 5 mm and the number of times of thread breakage in the innermost layer part, i.e., a drum with a winding thickness of 5 mm or less. A drum in which thread breakage occurred five times or less was judged as acceptable whereas a drum in which thread breakage occurred six times or more was judged as unacceptable.

### (6) Quality of woven fabric

First, 100 poly(lactic acid) monofilament-containing drum-shaped packages, each with a winding thickness of 40 mm and a thread weight of 1 kg, were prepared and subjected to weft picking evaluation using an air jet loom weaving machine, and its external appearance was inspected from a position under lighting with a brightness of 250 lux or more and 1,250 lux or less to determine the band-like gloss unevenness in the gray fabric. Evaluation was carried out according to a four-stage criterion, and a package was ranked as A when it was free of yarn stripes, ranked as B when it had some yarn stripes (low level), ranked as C when it had scattered yarn stripes (middle level), and ranked as D when it had many scattered yarn stripes (high level). Those ranked as A or B were judged as satisfactory.

### (7) Poly(lactic acid) polymer

Lactide was produced from L-lactic acid with an optical purity of 99.5% and subjected to polymerization in a nitrogen atmosphere at 180°C for 180 minutes in the presence of tin bis(2-ethyl hexanoate) catalyst (lactide vs. catalyst molar ratio = 10,000:1).

### (8) Wind-up tension (cN/dtex)

Using a Tension Meter and a FT-R pickup sensor manufactured by Toray Engineering Co., Ltd., the tension between the second godet rollers 9 and 10 and the wind-up device 14 in Fig. 2 was measured and divided by the fineness to give a quotient in cN/dtex.

### [Example 1]

Poly(lactic acid) chips in which lactic acid monomers accounted for 70 wt% or more were melted at 230°C, fed to a melt-spinning pack, discharged from the discharge hole of a spinneret 5 to produce a thread, which was then cooled, sent to an oiling roller type oil feeding device 6 where a straight spinning oil solution diluted with mineral oil was added (deposition rate: 0.7 wt%), sent to the first godet rollers 7 and 8 heated at 100°C and the second godet rollers 9 and 10 heated at 115°C, stretched 4.0 times, and heat-treated. Subsequently, while being traversed over an angle of 5.6° by a micro cam traverse type traverse motion apparatus 11, the thread was wound into a poly(lactic acid) monofilament-containing drum-shaped package with a winding width A of 70 mm, a winding thickness of 40 mm, and a weight of 1.0 kg under wind-up conditions including a surface pressure of 70 N/m, a RB-driving OF rate of 1.00%, and a wind-up speed setting (V) of 3,000 m/min. The drum-shaped package was found to have a good wound-up shape.

As raw thread properties, the resulting poly(lactic acid) monofilament had a fineness of 30 dtex, a tensile strength of 4.1 cN/dtex, a dry heat shrinkage stress of 0.028 cN/dtex in the innermost layer part, and a boiling water shrinkage rate of 17%.

One hundred drum-shaped packages obtained above were subjected to weft picking evaluation using an air jet loom weaving machine (warp used was 30 dtex poly(lactic acid) monofilament). The number of times of processed thread breakage was zero in the innermost layer part and it was one in the parts other than the innermost layer part, that is, one in total, showing the thread was acceptable. In addition, woven fabric quality evaluation also showed that the thread was free of yarn stripes and ranked as A, proving to have good quality. Thus, it was confirmed that the plain gauze fabrics obtained had good quality, confirming excellent high order passage capability during weaving.

### [Example 2]

Except for adopting a surface pressure of 100 N/m and a RB-driving OF rate of 0.50%, a poly(lactic acid) monofilament-containing drum-shaped package was produced under the same conditions as in Example 1. The drum-shaped package had a good wound-up shape.

As raw thread properties, the resulting poly(lactic acid) monofilament had a fineness of 30 dtex, a tensile strength of 4.2 cN/dtex, a dry heat shrinkage stress of 0.034 cN/dtex in the innermost layer part, and a boiling water shrinkage rate of 17%.

Then, weft picking evaluation was performed by the same procedure as Example 1. The number of times of processed thread breakage was one in the innermost layer part and it was zero in the parts other than the innermost layer part, that is, one in total, confirming that the thread was acceptable. In addition, woven fabric quality evaluation also showed that the thread was free of yarn stripes and ranked as A, proving to have good quality.

### [Example 3]

Except for adopting a surface pressure of 125 N/m and a RB-driving OF rate of 0.5%, a poly(lactic acid) monofilament-containing drum-shaped package was produced under the same conditions as in Example 1. The drum-shaped package had a good wound-up shape.

As raw thread properties, the resulting poly(lactic acid) monofilament had a fineness of 30 dtex, a tensile strength of 4.3 cN/dtex, a dry heat shrinkage stress of 0.039 cN/dtex in the innermost layer part, and a boiling water shrinkage rate of 18%.

Then, weft picking evaluation was performed by the same procedure as Example 1. In Example 3, in which winding was performed at a slightly higher surface pressure, the number of times of processed thread breakage was two in the innermost layer part and it was one in the parts other than the innermost layer part, that is, three in total, confirming that the thread was acceptable despite the slightly increased frequency of processed thread breakage. In the woven fabric quality evaluation, furthermore, the thread was ranked as B, showing that it was acceptable despite slight yarn stripes found in some portions.

### [Example 4]

Except for adopting a surface pressure of 55 N/m, a poly(lactic acid) monofilament-containing drum-shaped package was produced under the same conditions as in Example 1. Since winding-up of the drum-shaped package was performed at a lower surface pressure than in Example 1, the package was slightly lower in hardness and, as a result, had a slightly stepped wound-up shape in the package's edge portions, though it caused no significant deterioration in the product quality.

As raw thread properties, the resulting poly(lactic acid) monofilament had a fineness of 30 dtex, a tensile strength of 4.2 cN/dtex, a dry heat shrinkage stress of 0.025 cN/dtex in the innermost layer part, and a boiling water shrinkage rate of 18%.

Then, weft picking evaluation was performed by the same procedure as Example 1. The number of times of processed thread breakage was zero in the innermost layer part and it was three in the parts other than the innermost layer part, that is, three in total, confirming that the thread was acceptable. In addition, woven fabric quality evaluation also showed that the thread was free of yarn stripes and ranked as A, proving to have good quality.

### [Example 5]

Except for adopting a RB-driving OF rate of 1.5%, a poly(lactic acid) monofilament-containing drum-shaped package was produced under the same conditions as in Example 1. The drum-shaped package had a good wound-up shape. Since winding-up of the drum-shaped package was performed at a higher RB-driving OF rate than in Example 1, the degree of relaxation between the roller bail 12 and the spindle 13 slightly increased and as a result, spun thread breakage occurred several times due to thread coiling on the roller bail 12.

As raw thread properties, the resulting poly(lactic acid) monofilament had a fineness of 30 dtex, a tensile strength of 4.3 cN/dtex, a dry heat shrinkage stress of 0.026 cN/dtex in the innermost layer part, and a boiling water shrinkage rate of 18%.

Then, weft picking evaluation was performed by the same procedure as Example 1. The number of times of processed thread breakage was zero in the innermost layer part and it was one in the parts other than the innermost layer part, that is, one in total, confirming that the thread was acceptable. In addition, woven fabric quality evaluation also showed that the thread was free of yarn stripes and ranked as A, proving to have good quality.

### [Example 6]

Except for adopting a surface pressure of 65 N/m and a RB-driving OF rate of 2.00%, a poly(lactic acid) monofilament-containing drum-shaped package was produced under the same conditions as in Example 1. Since winding-up of the drum-shaped package was performed at a higher RB-driving OF rate than in Example 1, the degree of relaxation between the roller bail 12 and the spindle 13 slightly increased and as a result, spun thread breakage occurred several times due to thread coiling on the roller bail 12. As raw thread properties, the resulting poly(lactic acid) monofilament had a fineness of 30 dtex, a tensile strength of 4.3 cN/dtex, a dry heat shrinkage stress of 0.020 cN/dtex in the innermost layer part, and a boiling water shrinkage rate of 18%.

Then, weft picking evaluation was performed by the same procedure as Example 1. The number of times of processed thread breakage was zero both in the innermost layer part and in the parts other than the innermost layer part, confirming that the thread was acceptable. In addition, woven fabric quality evaluation also showed that the thread was free of yarn stripes and ranked as A, proving to have good quality.

### [Example 7]

Except for adopting a RB-driving OF rate of 0.05%, a poly(lactic acid) monofilament-containing drum-shaped package was produced under the same conditions as in Example 1. Since winding-up of the drum-shaped package was performed at a lower RB-driving OF rate than in Example 1, the package was at an acceptable level, though it has a slightly swollen shape.

As raw thread properties, the resulting poly(lactic acid) monofilament had a fineness of 30 dtex, a tensile strength of 4.3 cN/dtex, a dry heat shrinkage stress of 0.036 cN/dtex in the innermost layer part, and a boiling water shrinkage rate of 18%.

Then, weft picking evaluation was performed by the same procedure as Example 1. The number of times of processed thread breakage was one in the innermost layer part and it was also one in the parts other than the innermost layer part, that is, two in total, confirming that the thread was acceptable. In addition, woven fabric quality evaluation also showed that the thread was free of yarn stripes and ranked as A, proving to have good quality.

### [Example 8]

Except for adopting an altered discharge rate and stretching the thread 3.9 times, a poly(lactic acid) monofilament-containing drum-shaped package was produced under the same conditions as in Example 1. The drum-shaped package had a good wound-up shape.

As raw thread properties, the resulting poly(lactic acid) monofilament had a fineness of 17 dtex, a tensile strength of 4.1 cN/dtex, a dry heat shrinkage stress of 0.029 cN/dtex in the innermost layer part, and a boiling water shrinkage rate of 16%.

Then, weft picking evaluation was performed by the same procedure as Example 1. The number of times of processed thread breakage was one in the innermost layer part and it was also one in the parts other than the innermost layer part, that is, two in total, confirming that the thread was acceptable. In addition, woven fabric quality evaluation also showed that the thread was free of yarn stripes and ranked as A, proving to have good quality.

### [Example 9]

Except for adopting a second godet roller temperature of 90°C, a poly(lactic acid) monofilament-containing drum-shaped package was produced under the same conditions as in Example 1. The drum-shaped package had a good wound-up shape.

As raw thread properties, the resulting poly(lactic acid) monofilament had a fineness of 30 dtex, a tensile strength of 4.0 cN/dtex, a dry heat shrinkage stress of 0.030 cN/dtex in the innermost layer part, and a boiling water shrinkage rate of 26%.

Then, weft picking evaluation was performed by the same procedure as Example 1. The number of times of processed thread breakage was zero in the innermost layer part and it was one in the parts other than the innermost layer part, that is, one in total, confirming that the thread was acceptable. In the woven fabric quality evaluation, furthermore, the thread was ranked as B, showing that it was acceptable despite slight yarn stripes found in some portions, although there were an increased number of yarn stripes attributable to differences in boiling water shrinkage characteristics.

### [Example 10]

Except for adopting a surface pressure of 100 N/m, a RB-driving OF rate of 0.50%, a 1GR speed of 759 m/min, and a 2GR speed of 3,035 m/min, a poly(lactic acid) monofilament-containing drum-shaped package was produced under the same conditions as in Example 1. The drum-shaped package had a good wound-up shape, but thread breakage tended to occur more frequently during spinning. As raw thread properties, the resulting poly(lactic acid) monofilament had a fineness of 30 dtex, a tensile strength of 4.2 cN/dtex, a dry heat shrinkage stress of 0.034 cN/dtex in the innermost layer part, and a boiling water shrinkage rate of 17%.

Then, weft picking evaluation was performed by the same procedure as Example 1. The number of times of processed thread breakage was one in the innermost layer part and it was zero in the parts other than the innermost layer part, that is, one in total, confirming that the thread was acceptable. In addition, woven fabric quality evaluation also showed that the thread was free of yarn stripes and ranked as A, proving to have good quality.

### [Example 11]

Except for adopting a surface pressure of 100 N/m and a RB-driving OF rate of 0.00%, a poly(lactic acid) monofilament-containing drum-shaped package was produced under the same conditions as in Example 1. The drum-shaped package had a good wound-up shape.

As raw thread properties, the resulting poly(lactic acid) monofilament had a fineness of 30 dtex, a tensile strength of 4.1 cN/dtex, a dry heat shrinkage stress of 0.039 cN/dtex in the innermost layer part, and a boiling water shrinkage rate of 17%.

Then, weft picking evaluation was performed by the same procedure as Example 1. The number of times of processed thread breakage was two in the innermost layer part and it was one in the parts other than the innermost layer part, that is, three in total, confirming that the thread was acceptable despite the slightly increased frequency of processed thread breakage. In the woven fabric quality evaluation, furthermore, the thread was ranked as B, showing that it was acceptable despite slight yarn stripes found in some portions.

### [Comparative example 1]

Except for adopting a surface pressure of 178 N/m and a RB-driving OF rate of 0.10%, a poly(lactic acid) monofilament-containing drum-shaped package was produced under the same conditions as in Example 1.

As raw thread properties, the resulting poly(lactic acid) monofilament had a fineness of 30 dtex, a tensile strength of 4.3 cN/dtex, a dry heat shrinkage stress of 0.043 cN/dtex in the innermost layer part, and a boiling water shrinkage rate of 17%.

Then, weft picking evaluation was performed by the same procedure as Example 1. The number of times of processed thread breakage was 18 in the innermost layer part and it was one in the parts other than the innermost layer part, that is, 19 in total, confirming that the thread was unacceptable because of the frequent processed thread breakage particularly in the innermost layer part. Thus, in Comparative example 1 where winding-up was performed at a high surface pressure, the dry heat shrinkage stress was high in the innermost layer part and the high order passage capability was low during weaving.

### [Comparative example 2]

Except for adopting a surface pressure of 178 N/m and a RB-driving OF rate of 0.01%, a poly(lactic acid) monofilament-containing drum-shaped package was produced under the same conditions as in Example 1.

As raw thread properties, the resulting poly(lactic acid) monofilament had a fineness of 30 dtex, a tensile strength of 4.2 cN/dtex, a dry heat shrinkage stress of 0.050 cN/dtex in the innermost layer part, and a boiling water shrinkage rate of 18%.

Then, weft picking evaluation was performed by the same procedure as Example 1. The number of times of processed thread breakage was 48 in the innermost layer part and it was one in the parts other than the innermost layer part, that is, 49 in total, confirming that the thread was unacceptable because of the frequent processed thread breakage particularly in the innermost layer part. In the woven fabric quality evaluation, furthermore, the thread was ranked as C and unacceptable because of the existence of scattered yarn stripes. Thus, in Comparative example 2 where winding-up was performed at a high surface pressure and a low OF rate, the dry heat shrinkage stress was high in the innermost layer part and both the quality of the resulting plain gauze fabric and the high order passage capability during weaving were low.

### [Comparative example 3]

Except for adopting a surface pressure of 178 N/m and a RB-driving OF rate of 0.00%, a poly(lactic acid) monofilament-containing drum-shaped package was produced under the same conditions as in Example 1.

As raw thread properties, the resulting poly(lactic acid) monofilament had a fineness of 30 dtex, a tensile strength of 4.2 cN/dtex, a dry heat shrinkage stress of 0.054 cN/dtex in the innermost layer part, and a boiling water shrinkage rate of 17%.

Then, weft picking evaluation was performed by the same procedure as Example 1. The number of times of processed thread breakage was 75 in the innermost layer part and it was two in the parts other than the innermost layer part, that is, 77 in total, confirming that the thread was unacceptable because of the frequent processed thread breakage particularly in the innermost layer part. In the woven fabric quality evaluation, furthermore, the thread was ranked as C and unacceptable because of the existence of scattered yarn stripes. Thus, in Comparative example 3 where winding-up was performed at a high surface pressure and a low OF rate, the dry heat shrinkage stress was high in the innermost layer part and both the quality of the resulting plain gauze fabric and the high order passage capability during weaving were low.

### [Comparative example 4]

Except for adopting a surface pressure of 178 N/m and not adopting RB-driving, a poly(lactic acid) monofilament-containing drum-shaped package was produced under the same conditions as in Example 1.

As raw thread properties, the resulting poly(lactic acid) monofilament had a fineness of 30 dtex, a tensile strength of 4.1 cN/dtex, a dry heat shrinkage stress of 0.058 cN/dtex in the innermost layer part, and a boiling water shrinkage rate of 17%.

Then, weft picking evaluation was performed by the same procedure as Example 1. The number of times of processed thread breakage was 89 in the innermost layer part and it was two in the parts other than the innermost layer part, that is, 91 in total, confirming that the thread was unacceptable because of the frequent processed thread breakage particularly in the innermost layer part. In the woven fabric quality evaluation, furthermore, the thread was ranked as D and unacceptable because of the existence of scattered distinct yarn stripes. Thus, in Comparative example 4 where winding-up was performed at a high surface pressure without RB-driving, the dry heat shrinkage stress was high in the innermost layer part and both the quality of the resulting plain gauze fabric and the high order passage capability during weaving were low.

### [Comparative example 5]

Except for adopting a surface pressure of 100 N/m and not adopting RB-driving, a poly(lactic acid) monofilament-containing drum-shaped package was produced under the same conditions as in Example 1.

As raw thread properties, the resulting poly(lactic acid) monofilament had a fineness of 30 dtex, a tensile strength of 4.2 cN/dtex, a dry heat shrinkage stress of 0.053 cN/dtex in the innermost layer part, and a boiling water shrinkage rate of 17%.

Then, weft picking evaluation was performed by the same procedure as Example 1. The number of times of processed thread breakage was 70 in the innermost layer part and it was two in the parts other than the innermost layer part, that is, 72 in total, confirming that the thread was unacceptable because of the frequent processed thread breakage particularly in the innermost layer part. In the woven fabric quality evaluation, furthermore, the thread was ranked as C and unacceptable because of the existence of scattered distinct yarn stripes. Thus, in Comparative example 5 where winding-up was performed without RB-driving, the dry heat shrinkage stress was high in the innermost layer part and both the quality of the resulting plain gauze fabric and the high order passage capability during weaving were low.

The spinning conditions, raw thread characteristics, and woven fabric evaluation results in Examples and Comparative examples are shown in Tables 1 and 2.

### [Table 1]

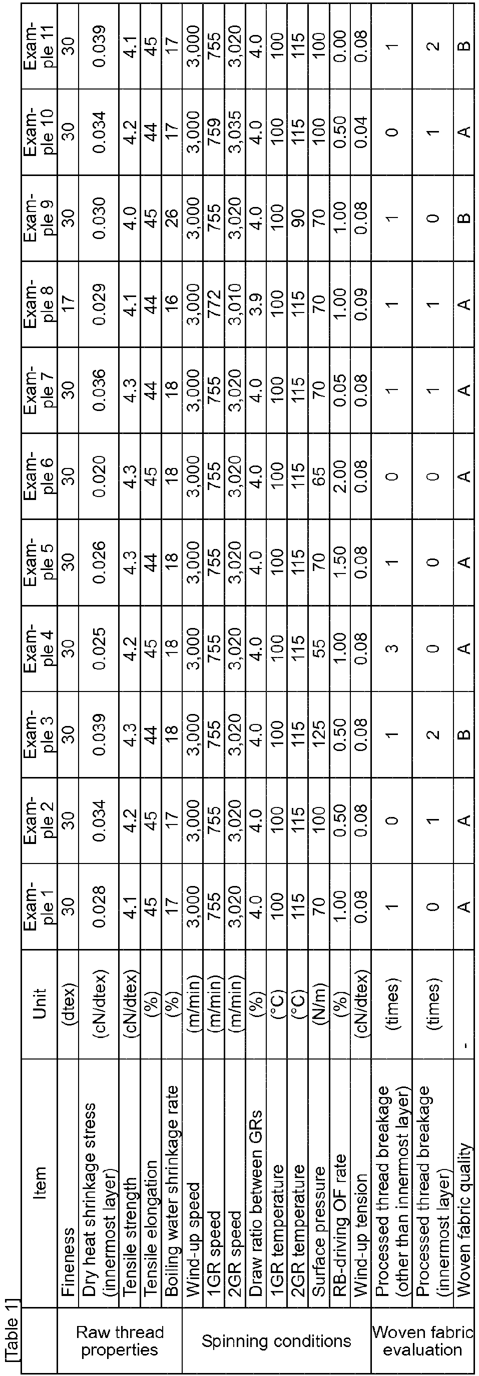

### [Table 2]

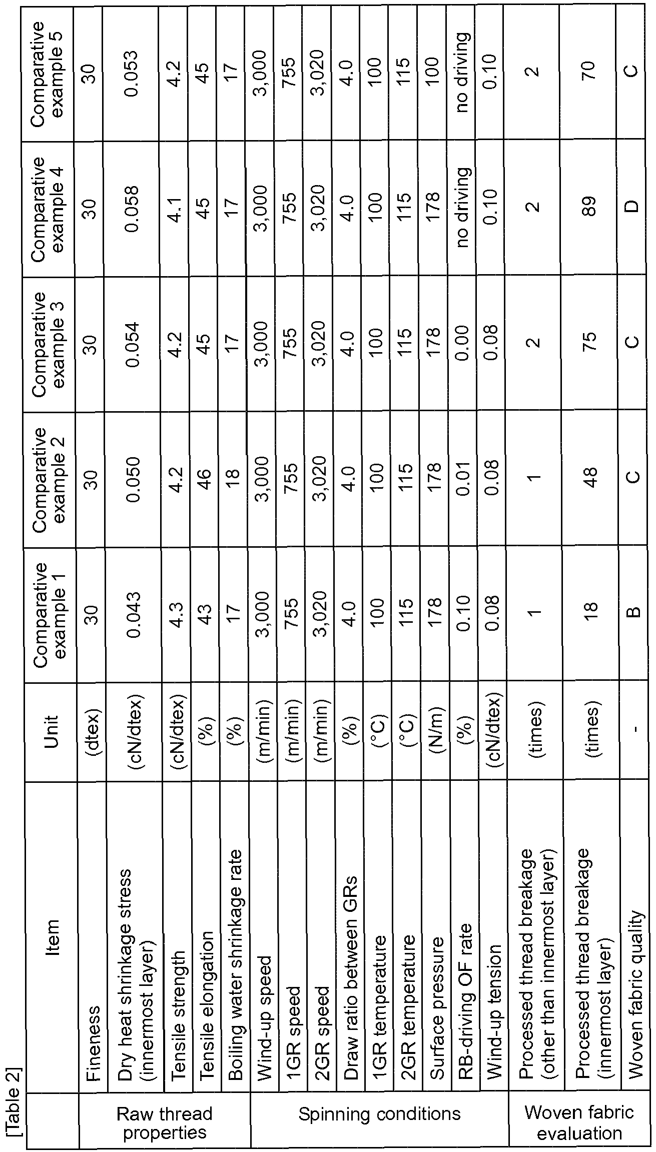

### Explanation of Numerals

- 1:: thread
- 2:: paper tube
- 3:: poly(lactic acid)-based monofilament-containing package
- 4:: spinning block
- 5:: spinneret
- 6:: oil feeding device
- 7:: first godet roller (U)
- 8:: first godet roller (L)
- 9:: second godet roller (U)
- 10:: second godet roller (L)
- 11:: traverse motion apparatus
- 12:: roller bail
- 13:: spindle
- 14:: wind-up device

## Claims

1. A drum-shaped package formed of a poly(lactic acid)-based monofilament 50 wt% or more of which is constituted from lactic acid monomer, in which the dry heat shrinkage stress of the monofilament in the innermost layer section of the package is 0.040 cN/dtex or less, **characterized in that** the monofilament has a tensile strength of 2.5 cN/dtex or more and a boiling water shrinkage rate of 20% or less.

2. A drum-shaped package formed of a poly(lactic acid)-based monofilament as described in claim 1, wherein the monofilament has a fineness of 15 dtex to 40 dtex.

## Patentansprüche

1. Trommelförmige Packung, die aus einem Monofilament auf Poly(milchsäure)-Basis gebildet ist, wobei 50 Gew.-% oder mehr davon aus Milchsäuremonomer bestehen, wobei die Trockenwärmeschrumpfspannung des Monofilaments in dem innersten Schichtabschnitt der Packung 0,040 cN/dtex oder weniger beträgt, **dadurch gekennzeichnet, dass** das Monofilament eine Zugfestigkeit von 2,5 cN/dtex oder mehr und eine Schrumpfrate in kochendem Wasser von 20 % oder weniger aufweist.

2. Trommelförmige Packung, die aus einem Monofilament auf Poly(milchsäure)-Basis gebildet ist, nach Anspruch 1, wobei das Monofilament eine Feinheit von 15 dtex bis 40 dtex aufweist.

## Revendications

1. Paquet en forme de tambour formé de 50 % en poids ou plus d'un monofilament à base de poly(acide lactique) qui est constitué à partir de monomère d'acide lactique, dans lequel la tension par retrait sous chaleur sèche du monofilament dans la section de couche la plus intérieure du paquet est de 0,040 cN/dtex ou moins, **caractérisé en ce que** le monofilament a une résistance à la traction de 2,5 cN/dtex ou plus et un taux de retrait dans l'eau bouillante de 20 % ou moins.

2. Paquet en forme de tambour formé d'un monofilament à base de poly(acide lactique) selon la revendication 1, dans lequel le monofilament a une finesse de 15 dtex à 40 dtex.
